# EUROPÄISCHE PATENTSCHRIFT

(11) **EP 1 950 677 B1**
(45) Veröffentlichungstag und Bekanntmachung des Hinweises auf die Patenterteilung: **06.12.2017**
(21) Anmeldenummer: 08001405.3
(22) Anmeldetag: 25.01.2008
(51) Int. Cl.: G06F 21/31, G06F 21/33

(54) **Authentisieren von zwei an einer Transaktion beteiligten Transaktionspartnern**
Authentification of two transaction partners taking part in a transaction
Authentification de deux partenaires de transaction participant à une transaction

(30) Priorität: 26.01.2007 DE 102007004957
(43) Veröffentlichungstag der Anmeldung: 30.07.2008
(73) Patentinhaber: Vodafone Holding GmbH, 40213 Düsseldorf (DE)
(72) Erfinder: Bröcking, Peter, 47809 Krefeld (DE)
(74) Vertreter: Weisbrodt, Bernd

(56) Entgegenhaltungen:
- EP-A- 1 107 089
- WO-A-02/37241
- WO-A-2005/024743
- DE-A1- 19 938 201
- GB-A- 2 366 139
- US-A1- 2003 009 427
- US-A1- 2003 041 270
- US-A1- 2005 039 057
- US-A1- 2006 095 788
- US-A1- 2006 288 225

## Beschreibung

Die vorliegende Erfindung betrifft Verfahren zum beidseitigen Authentisieren von zwei an einer Transaktion beteiligten Transaktionspartnern.

Ferner betrifft die vorliegende Erfindung ein Mobilfunknetz und ein in einem Mobilfunknetz betreibbares Endgerät, vorzugsweise gemäß dem GSM- und/oder UMTS-Funknetzstandard, welche zumindest teilweise ausgebildet und/oder eingerichtet sind ein erfindungsgemäßes Verfahren auszuführen.

Im Stand der Technik sind verschiedene Systeme, Verfahren und Vorrichtungen zur Authentisierung von an einer Transaktion, insbesondere sogenannten Homebanking-Anwendungen oder Zugriffen auf Daten und/oder Dienste bereithaltende Kommunikationsnetzwerke wie dem Internet oder sogenannten Intranets von Unternehmen, beteiligten Transaktionspartnern bekannt, beispielsweise aus der DE 199 38 201 A1. Authentisieren im Sinne der vorliegenden Erfindung ist dabei das Nachweisen einer Identität eines Transaktionspartners.

Nachteilig bei den bisher bekannten Authentisierungen von an einer Transaktion beteiligten Transaktionspartnern ist das insbesondere in nichtverbindungsorientierten Kommunikationsnetzwerken wie dem Internet bisher lediglich eine einseitige Identifizierung der Identität eines Transaktionspartners stattfindet und/oder die Authentisierung mit zusätzlichen Kosten, insbesondere für Authentisierungseinrichtungen und -mittel verbunden ist.

Der Erfindung liegt in Anbetracht dieses Standes der Technik die Aufgabe zugrunde, die Authentisierung von an einer Transaktion beteiligten Transaktionspartnern zu verbessern, insbesondere hinsichtlich der Sicherheit als auch hinsichtlich der System- und/oder Handhabungsaufwendungen.

Zur technischen Lösung wird mit der vorliegenden Erfindung ein Verfahren zum beidseitigen Authentisieren von zwei an einer Transaktion beteiligten Transaktionspartnern, dem einen Transaktionspartner und dem anderen Transaktionspartner, vorgeschlagen, welches dadurch gekennzeichnet ist, dass der eine Transaktionspartner dem anderen Transaktionspartner wenigstens die ihm seitens eines Mobilfunknetzes eindeutig zugeordnete Mobilfunknetzrufnummer sendet, eine eine Frage beinhaltende Nachricht seitens eines die Mobilfunknetzrufnummer nutzenden Endgerätes, welches in einem Mobilfunknetz betreibbar ist, über einen Nachrichtendienst des Mobilfunknetzes empfängt und dem anderen Transaktionspartner die Antwort auf die Frage sendet.

Zur technischen Lösung der eingangs genannten Aufgabe wird mit der vorliegenden Erfindung ferner ein Verfahren zum beidseitigen Authentisieren von zwei an einer Transaktion beteiligten Transaktionspartnern, dem einen Transaktionspartner und dem anderen Transaktionspartner, vorgeschlagen, welches dadurch gekennzeichnet ist, dass der andere Transaktionspartner wenigstens die dem einen Transaktionspartner seitens eines Mobilfunknetzes eindeutig zugeordnete Mobilfunknetzrufnummer empfängt, das Senden einer eine Frage beinhaltenden Nachricht mittels eines Nachrichtendienstes des Mobilfunknetzes an die Mobilfunknetzrufnummer initiiert, eine Antwort auf die gesendete Frage empfängt, die Antwort mittels eines Nachrichtendienstes des Mobilfunknetzes an das Mobilfunknetz sendet und das Ergebnis eines Vergleichs der gesendeten Antwort mit einer seitens des Mobilfunknetzes vorliegenden Antwort auf die Frage mittels eines Nachrichtendienstes des Mobilfunknetzes empfängt.

Weiter ist erfindungsgemäß ein Verfahren von zwei an einer Transaktion beteiligten Transaktionspartnern, dem einen Transaktionspartner und dem anderen Transaktionspartner, unter Nutzung eines Mobilfunknetzes vorgesehen, welches dadurch gekennzeichnet ist, dass das Mobilfunknetz unter Mitteilung einer Mobilfunknetzrufnummer eine Aufforderung erhält, eine eine Frage beinhaltende Nachricht mittels eines Nachrichtendienstes des Mobilfunknetzes an die Mobilfunknetzrufnummer zu senden, eine eine Frage beinhaltende Nachricht mittels eines Nachrichtendienstes des Mobilfunknetzes an die Mobilfunknetzrufnummer sendet, auf die gesendete Frage von dem Sender der Aufforderung zum Senden der Frage eine Antwort auf die Frage mittels eines Nachrichtendienstes des Mobilfunknetzes erhält, die erhaltende Antwort mit einer seitens des Mobilfunknetzes vorliegenden Antwort auf die Frage vergleicht und das Ergebnis des Vergleichs an den Sender der Aufforderung mittels eines Nachrichtendienstes des Mobilfunknetzes sendet.

Weiter wird zur technischen Lösung der eingangs genannten Aufgabe ein Verfahren zum beidseitigen Authentisieren von zwei an einer Transaktion beteiligten Transaktionspartnern, dem einen Transaktionspartner und dem anderen Transaktionspartner, vorgeschlagen, welches dadurch gekennzeichnet ist, dass im Rahmen eines Transaktionsdialogs zwischen den Transaktionspartnern der eine Transaktionspartner wenigstens die ihm seitens eines Mobilfunknetzes eindeutig zugeordnete Mobilfunknetzrufnummer dem anderen Transaktionspartner mitteilt, der andere Transaktionspartner das Mobilfunknetz unter Mitteilung der Mobilfunknetzrufnummer auffordert eine eine Frage beinhaltende Nachricht eines Nachrichtendienstes des Mobilfunknetzes an die Mobilfunknetzrufnummer zu senden, das Mobilfunknetz eine eine Frage beinhaltende Nachricht eines Nachrichtendienstes des Mobilfunknetzes an die Mobilfunknetzrufnummer des einen Transaktionspartners sendet, der eine Transaktionspartner dem anderen Transaktionspartner die Antwort auf die Frage mitteilt, der andere Transaktionspartner die Antwort dem Mobilfunknetz mitteilt, seitens des Mobilfunknetzes die von dem anderen Transaktionspartner mitgeteilte Antwort mit der seitens des Mobilfunknetzes vorliegenden Antwort auf die Frage verglichen wird und das Ergebnis des Vergleichs dem anderen Transaktionspartner mitgeteilt wird.

Den erfindungsgemäßen Lösungen liegt die Erkenntnis zugrunde, dass die Identität einer Person im Rahmen einer Transaktion eindeutig durch erfindungsgemäße Nutzung von seitens eines Mobilfunknetzes eingerichteten Authentisierungs- und/oder Sicherungsmechanismen sicherstellbar ist. Von Vorteil ist dabei insbesondere, dass erfindungsgemäße Zugriffe über das Mobilfunknetz sehr sicher sind, insbesondere da Mobilfunknetze gemäß dem GSM-, GPRS- und/oder UMTS-Funknetzstandard sehr hohe Authentisierungs- und/oder Sicherheitsstandards aufweisen. Erfindungsgemäß werden dabei beide Transaktionspartner identifiziert, wobei vorteilhafterweise eine mehrfach Absicherung hinsichtlich des Nachweises einer eindeutigen Identität der Transaktionspartner gegeben ist. Darüber hinaus sind aufgrund der weiten Verbreitung von in Mobilfunknetzen nutzbaren mobilen Endgeräten und deren Anwendern die mit der Authentisierung im Zusammenhang stehenden System- und/oder Handhabungsaufwendungen im Vergleich zu ansonsten für Authentisierungen erforderliche Authentisierungseinrichtungen und/oder -mittel relativ gering.

Vorteilhafterweise wird die Frage aus einer dem Mobilfunknetz zugänglichen Liste von Fragen zufällig ausgewählt. Eine entsprechende Liste mit Fragen kann dabei von dem jeweiligen Transaktionspartner selbstständig erstellt und dem Mobilfunknetz mitgeteilt werden, vorzugsweise unter Nutzung eines Nachrichtendienstes des Mobilfunknetzes. Eine weitere vorteilhafte Ausgestaltung der Erfindung sieht vor, dass die Liste von Fragen nebst entsprechenden Antworten von dem einen Transaktionspartner zusammengestellt und/oder vorgegeben ist. Eine weitere Ausgestaltung der Erfindung sieht vor, dass dem einen Transaktionspartner von dem Mobilfunknetz Fragen zur Zusammenstellung der Liste von Fragen vorgeschlagen werden, vorzugsweise in auswählbarer Form.

In einer weiteren vorteilhaften Ausgestaltung der Erfindung teilt der eine Transaktionspartner dem anderen Transaktionspartner die Antwort auf die Frage im Rahmen des Transaktionsdialogs mit.

Gemäß einem weiteren vorteilhaften Vorschlag der Erfindung teilt der andere Transaktionspartner dem Mobilfunknetz die Antwort durch Senden einer Nachricht eines Nachrichtendienstes des Mobilfunknetzes mit.

Vorteilhafterweise teilt das Mobilfunknetz dem anderen Transaktionspartner das Ergebnis des Vergleichs durch Senden einer Nachricht eines Nachrichtendienstes des Mobilfunknetzes mit. Eine weitere Ausgestaltung der Erfindung sieht vor, dass das Ergebnis des Vergleichs dem anderen Transaktionspartner bei Übereinstimmung der mitgeteilten Antwort mit der seitens des Mobilfunknetzes vorliegenden Antwort auf die Frage mitgeteilt wird. Hierdurch wird vorteilhafterweise das Senden von Nachrichten unter Nutzung eines Nachrichtendienstes des Mobilfunknetzes nur bei positiven Vergleichsergebnis, also bei Übereinstimmung der mitgeteilten Antwort, übertragen, so dass das Mobilfunknetz hinsichtlich der Netzauslastung bezüglich des Versendens von Nachrichten mittels des Nachrichtendienstes des Mobilfunknetzes nicht unnötig ausgelastet wird.

Eine weitere vorteilhafte Ausgestaltung der Erfindung ist gekennzeichnet durch einen Kurmitteilungsdienst (SMS: Short Message Service), einen Multimedia-Mitteilungsdienst (MMS: Multimedia Message Service) und/oder einen Nachrichtensofortversanddienst (Instant Messaging Service) als Nachrichtendienst des Mobilfunknetzes.

Eine weitere vorteilhafte Ausgestaltung der Erfindung ist dadurch gekennzeichnet, dass der Transaktionsdialog über ein nichtverbindungsorientiertes Kommunikationsnetzwerk, vorzugsweise das Internet, erfolgt. Erfindungsgemäß ist dann eine Authentisierung über das Mobilfunknetz gegeben, wobei die zur Authentisierung zwischen den Transaktionspartnern auszutauschenden Fragen beziehungsweise Antworten einander über das nichtverbindungsorientierte Kommunikationsnetzwerk mitgeteilt werden. Das Mobilfunknetz übernimmt die Authentisierung der Transaktionspartner bezüglich deren eindeutiger Identität, insbesondere durch den Vergleich beziehungsweise das Ergebnis des Vergleichs. Alternativ und/oder ergänzend kann der Transaktionsdialog auch über ein anderes Kommunikationsnetzwerk erfolgen.

Die erfindungsgemäßen Verfahren werden vorteilhafterweise zumindest teilweise seitens eines Mobilfunknetzes, vorzugsweise gemäß dem GSM-, GPRS- und/oder UMTS-Funknetzstandard, ausgeführt.

Eine weitere Ausgestaltung der Erfindung sieht vor, dass die erfindungsgemäßen Verfahren zumindest teilweise seitens eines in einem Mobilfunknetz, vorzugsweise gemäß dem GSM-, GPRS- und/oder UMTS-Funknetzstandard, betreibbaren Endgeräts, vorzugsweise mobilen Endgeräts, ausgeführt werden.

Eine weitere Ausgestaltung der Erfindung sieht ein Mobilfunknetz, vorzugsweise gemäß dem GSM-, GPRS- und/oder UMTS-Funknetzstandard, vor, dessen Einrichtungen und/oder Komponenten zumindest teilweise ausgebildet und/oder eingerichtet sind, ein erfindungsgemäßes Verfahren auszuführen.

Gegenstand der vorliegenden Erfindung ist ferner ein Endgerät zum Betrieb in einem Mobilfunknetz, vorzugsweise gemäß dem GSM-, GPRS- und/oder UMTS-Funknetzstandard, welches zumindest teilweise ausgebildet und/oder eingerichtet ist, ein erfindungsgemäßes Verfahren auszuführen.

Weitere Einzelheiten, Merkmale und Vorteile der Erfindung werden nachfolgend anhand des in der Figur der Zeichnung dargestellten Ausführungsbeispiels näher erläutert. Dabei zeigt:

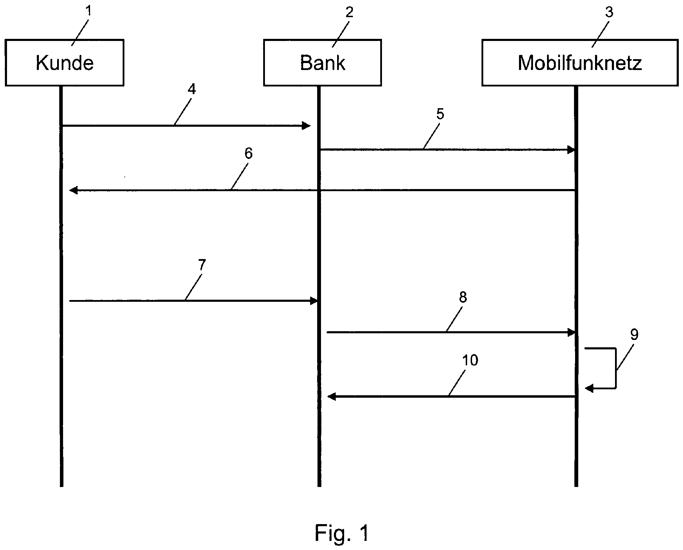

- Fig. 1: in einer schematischen Prinzipdarstellung ein Ausführungsbeispiel einer erfindungsgemäßen beidseitigen Authentisierung von zwei an einer Transaktion beteiligten Transaktionspartnern.

Fig. 1 zeig in einer Prinzipdarstellung ein erfindungsgemäßes Verfahren zum beidseitigen Authentisieren von zwei an einer Transaktion beteiligten Transaktionspartnern, vorliegend anhand einer sogenannten Homebanking-Anwendung, wobei die beteiligten Transaktionspartner zum einen der Kunde 1 und zum anderen die Bank 2 sind. In den durch den mit 4 gekennzeichneten Pfeil dargestellten Verfahrensschritt wird ausgehend von dem Kunden 1 zwischen dem Kunden 1 und der Bank 2 ein Transaktionsdialog zwischen den beiden Transaktionspartnern 1 und 2 aufgerufen. Im Rahmen dieses Transaktionsdialogs, welcher über ein nichtverbindungsorientiertes Kommunikationsnetzwerk wie dem Internet oder aber über eine Mobilfunknetzverbindung erfolgen kann, teilt der Transaktionspartner Kunde 1 dem anderen Transaktionspartner Bank 2 die ihm seitens eines Mobilfunknetzes 3 eindeutig zugeordnete Mobilfunknetzrufnummer, die sogenannte MSISDN (MSISDN: Mobile Subscriber ISDN (ISDN: Integrated Services Digital Network)) mit. Neben der Mobilfunknetzrufnummer (MSISDN) können dabei im Rahmen des Transaktionsdialogs zwischen den Transaktionspartnern Kunde 1 und Bank 2 weitere Informationen bezüglich der Transaktion ausgetauscht werden, insbesondere ausgehängt vom Transaktionspartner Kunde 1.

In dem durch den mit 5 gekennzeichneten Pfeil dargestellten Verfahrensschritt fordert der Transaktionspartner Bank 2 unter Verwendung der Mobilfunknetzrufnummer des Transaktionspartners Kunde 1 beim Mobilfunknetz 3 eine eine Frage beinhaltende Nachricht eines Nachrichtendienstes des Mobilfunknetzes an, welche an die Mobilfunknetzrufnummer des Transaktionspartners Kunde 1 zu senden ist. Seitens des Mobilfunknetzes 3 wird dazu aus einer seitens des Mobilfunknetzes 3 bevorrateten Liste von Fragen zufällig eine Frage ausgewählt. Die ausgewählte Frage wird dann mittels eines Nachrichtendienstes des Mobilfunknetzes 3 an die Mobilfunknetzrufnummer (MSISDN) des Transaktionspartners Kunde 1 als die Frage beinhaltende Nachricht mittels des Nachrichtendienstes gesendet. Dieser Vorgang ist in Fig. 1 durch den mit 6 gekennzeichneten Pfeil dargestellt. Als Nachrichtendienst des Mobilfunknetzes 3 wird vorliegend SMS (SMS: Short Message Service) genutzt. Der Transaktionspartner Kunde 1 erhält so über das Mobilfunknetz 3 eine Frage auf sein in dem Mobilfunknetz 3 betreibbares mobiles Endgerät zugestellt, vorliegend beispielsweise die seitens des Mobilfunknetzes 3 für den beziehungsweise von dem Transaktionspartner Kunde 1 hinterlegte Frage: "Hausnummer meiner Großmutter". Der Kunde kann anhand der ihm mittels SMS in Verfahrensschritt 6 übersandten Nachricht mit von ihm hinterlegten Inhalt erkennen beziehungsweise darauf schließen, dass der andere Transaktionspartner, vorliegend also die Bank 2, als Anbieter bestimmter Transaktionen echt sein muss. Mit dem in Fig. 1 durch den mit 7 gekennzeichneten Pfeil dargestellten Verfahrensschritt teilt der eine Transaktionspartner Kunde 1 dem anderen Transaktionspartner Bank 2 die Antwort auf die in Verfahrensschritt 6 erhaltende Frage mit. Die Übermittlung der Antwort an den Transaktionspartner 2 in dem Verfahrensschritt 7 kann dabei über das Internet oder aber über eine Mobilfunknetzverbindung erfolgen. Da die in Verfahrensschritt 6 dem einen Transaktionspartner Kunde 1 gestellte Frage nicht immer gleich ist, führt ein Abhören der Mitteilung der Antwort von dem Transaktionspartner Kunde 1 an den Transaktionspartner Kunde 2 vorliegend nicht zu einer Sicherheitslücke. Hinzu kommt, dass bei Nutzung von Mobilfunknetzverbindungen für die Nachrichtenübermittlung selbige erhöhte Sicherheitsstandards aufweisen, die ein Abhören quasi unmöglich machen.

In dem in Fig. 1 durch den mit Bezugszeichen 8 gekennzeichneten Pfeil dargestellten Verfahrensschritt teilt der andere Transaktionspartner Bank 2 die von dem einen Transaktionspartner Kunde 1 in Verfahrensschritt 7 erhaltende Antwort dem Mobilfunknetz 3 mit. Seitens des Mobilfunknetzes 3 wird dann in dem mit 9 gekennzeichneten Verfahrensschritt die von dem anderen Transaktionspartner Bank 2 in Verfahrensschritt 8 mitgeteilte Antwort mit der seitens des Mobilfunknetzes 3 vorliegenden Antwort auf die in Verfahrensschritt 6 dem einen Transaktionspartner Kunde 1 gestellte Frage verglichen. Bei positivem Vergleichsergebnis in Verfahrensschritt 9, also bei Übereinstimmung der seitens des Mobilfunknetzes 3 zu der Frage bevorrateten Antwort und der in Verfahrensschritt 8 von dem Transaktionspartner Bank 2 erhaltenden Antwort, erhält der andere Transaktionspartner Bank 2 von dem Mobilfunknetz eine die Identifikation des einen Transaktionspartners Kunde 1 bestätigende Nachricht. Die Übermittlung der Nachrichten in den Verfahrensschritten 4, 5, 6, 7, 8 und 10 erfolgt in bevorzugter Ausführungsvariante über das Mobilfunknetz 3. Alternativ und/oder ergänzend kann die Nachrichtenübermittlung in den Verfahrensschritten 4, 5, 7, 8 und 10 auch über ein anderes Kommunikationsnetzwerk, insbesondere ein nichtverbindungsorientiertes Kommunikationsnetzwerk wie das Internet erfolgen.

Mit Erhalt der die Identifikation des Transaktionspartners Kunde 1 bestätigende Nachricht steht für den anderen Transaktionspartner Bank 2 fest, dass die Identität des Transaktionspartners Kunde 1 echt sein muss, da der Kunde 1 sowohl das richtige mobile Endgerät hat und auch die richtige Antwort auf die in Verfahrensschritt 6 gestellte Frage kennt. Das Vorliegen des richtigen Mobilfunkendgerätes bedingt darüber hinaus, dass der Transaktionspartner Kunde 1 ganz offensichtlich auch die zu der Mobilfunknetzrufnummer (MSISDN) zur Zugangsermöglichung zum Mobilfunknetz 3 in der Regel erforderliche PIN (PIN: Personal Identification Number) für den Zugang zum Mobilfunknetz 3 haben muss.

Das in der Figur der Zeichnung dargestellte und im Zusammenhang mit dieser beschriebene Ausführungsbeispiel dient lediglich der Erläuterung der Erfindung und ist für diese nicht beschränkend.

### Bezugszeichenliste:

- 1: Transaktionspartner/Kunde
- 2: Transaktionspartner/Bank
- 3: Mobilfunknetz
- 4: Verfahrenschritt (Aufruf Transaktionsdialog)
- 5: Verfahrensschritt (Anforderung Frage)
- 6: Verfahrensschritt (Versendung Frage)
- 7: Verfahrensschritt (Eingabe Antwort)
- 8: Verfahrensschritt (Weitergabe Antwort)
- 9: Verfahrensschritt (Vergleich Antwort)
- 10: Verfahrensschritt (Bestätigung Identifikation)

## Patentansprüche

1. Verfahren zum beidseitigen Authentisieren von zwei an einer Transaktion beteiligten Transaktionspartnern (Kunde, 1, Bank, 2), dem einen Transaktionspartner (Kunde, 1) und dem anderen Transaktionspartner (Bank, 2), wobei der eine Transaktionspartner (Kunde, 1)
- dem anderen Transaktionspartner (Bank, 2) wenigstens die ihm (Kunde, 1) seitens eines Mobilfunknetzes (3) eindeutig zugeordnete Mobilfunknetzrufnummer (MSISDN) sendet,
- eine eine Frage beinhaltende Nachricht seitens eines die Mobilfunknetzrufnummer (MSISDN) nutzenden Endgerätes, welches in einem Mobilfunknetz (3) betreibbar ist, über einen Nachrichtendienst des Mobilfunknetzes (3) empfängt,
- dem anderen Transaktionspartner (Bank, 2) die Antwort auf die Frage sendet;
**dadurch gekennzeichnet, dass** eine Liste von Fragen nebst entsprechenden Antworten von dem einen Transaktionspartner (Kunde,1) zusammengestellt und/ oder vorgegeben ist und wobei die Frage aus der dem Mobilfunknetz zugänglichen Liste von Fragen zufällig ausgewählt wird, wobei der eine Transaktionspartner (Kunde, 1) anhand der ihm (Kunde, 1) übersandten Nachricht mit von ihm (Kunde, 1) hinterlegten Inhalt erkennen bzw. darauf schließen kann, dass der andere Transaktionspartner (Bank, 2) echt sein muss.

2. Verfahren zum beidseitigen Authentisieren von zwei an einer Transaktion beteiligten Transaktionspartnern (Kunde, 1, Bank, 2), dem einen Transaktionspartner (Kunde, 1) und dem anderen Transaktionspartner (Bank, 2), wobei der andere Transaktionspartner (Bank, 2)
- wenigstens die dem einen Transaktionspartner (Kunde,1) seitens eines Mobilfunknetzes (3) eindeutig zugeordnete Mobilfunknetzrufnummer (MSISDN) empfängt,
- das Senden einer eine Frage beinhaltenden Nachricht mittels eines Nachrichtendienstes des Mobilfunknetzes (3) an die Mobilfunknetzrufnummer (MSISDN) initiiert,
- eine Antwort auf die gesendete Frage empfängt,
- die Antwort mittels eines Nachrichtendienstes des Mobilfunknetzes (3) an das Mobilfunknetz (3) sendet und
- das Ergebnis eines Vergleichs (9) der gesendeten Antwort mit einer seitens des Mobilfunknetzes (3) vorliegenden Antwort auf die Frage mittels eines Nachrichtendienstes des Mobilfunknetzes (3) empfängt;
**dadurch gekennzeichnet dass** eine Liste von Fragen nebst entsprechenden Antworten von dem einen Transaktionspartner (Kunde,1) zusammengestellt und/oder vorgegeben ist und wobei die Frage aus der dem Mobilfunknetz zugänglichen Liste von Fragen zufällig ausgewählt wird, wobei der eine Transaktionspartner (Kunde, 1) anhand der ihm (Kunde, 1) übersandten Nachricht mit von ihm (Kunde, 1) hinterlegten Inhalt erkennen bzw. darauf schließen kann, dass der andere Transaktionspartner (Bank, 2) echt sein muss.

3. Verfahren zum beidseitigen Authentisieren von zwei an einer Transaktion beteiligten Transaktionspartnern (Kunde, 1, Bank, 2), dem einen Transaktionspartner (Kunde, 1) und dem anderen Transaktionspartner (Bank, 2), unter Nutzung eines Mobilfunknetzes (3), wobei das Mobilfunknetz
- unter Mitteilung einer Mobilfunknetzrufnummer (MSISDN) eine Aufforderung (5) erhält, eine eine Frage beinhaltende Nachricht mittels eines Nachrichtendienstes des Mobilfunknetzes (3) an die Mobilfunknetzrufnummer (MSISDN) zu senden,
- eine eine Frage beinhaltende Nachricht mittels eines Nachrichtendienstes des Mobilfunknetzes (3) an die Mobilfunknetzrufnummer (MSISDN) sendet,
- auf die gesendete Frage von dem Sender (Bank, 2) der Aufforderung (5) zum Senden der Frage eine Antwort auf die Frage mittels eines Nachrichtendienstes des Mobilfunknetzes (3) erhält,
- die erhaltene Antwort mit einer seitens des Mobilfunknetzes (3) vorliegenden Antwort auf die Frage vergleicht und
- das Ergebnis des Vergleichs (9) an den Sender (Bank, 2) der Aufforderung (5) mittels eines Nachrichtendienstes des Mobilfunknetzes (3) sendet;
**dadurch gekennzeichnet dass** eine Liste von Fragen nebst entsprechenden Antworten von dem einen Transaktionspartner (Kunde,1) zusammengestellt und/ oder vorgegeben ist und wobei die Frage aus der dem Mobilfunknetz zugänglichen Liste von Fragen zufällig ausgewählt wird, wobei der eine Transaktionspartner (Kunde, 1) anhand der ihm (Kunde, 1) übersandten Nachricht mit von ihm (Kunde, 1) hinterlegten Inhalt erkennen bzw. darauf schließen kann, dass der andere Transaktionspartner (Bank, 2) echt sein muss

4. Verfahren zum beidseitigen Authentisieren von zwei an einer Transaktion beteiligten Transaktionspartnern (Kunde, 1, Bank, 2), dem einen Transaktionspartner (Kunde, 1) und dem anderen Transaktionspartner (Bank, 2) wobei im Rahmen eines Transaktionsdialogs (4) zwischen den Transaktionspartnern (Kunde, 1, Bank, 2) der eine Transaktionspartner (Kunde, 1) wenigstens die ihm (Kunde, 1) seitens eines Mobilfunknetzes (3) eindeutig zugeordnete Mobilfunknetzrufnummer (MSISDN) dem anderen Transaktionspartner (Bank, 2) mitteilt,
der andere Transaktionspartner (Bank, 2) das Mobilfunknetz (3) unter Mitteilung der Mobilfunknetzrufnummer (MSISDN) auffordert eine eine Frage beinhaltende Nachricht (6) eines Nachrichtendienstes des Mobilfunknetzes (3) an die Mobilfunknetzrufnummer (MSISDN) zu senden,
das Mobilfunknetz (3) eine eine Frage beinhaltende Nachricht (6) eines Nachrichtendienstes des Mobilfunknetzes (3) an die Mobilfunknetzrufnummer (MSISDN) des einen Transaktionspartners (Kunde, 1)
der eine Transaktionspartner (Kunde, 1) dem anderen Transaktionspartner (Bank, 2) die Antwort auf die Frage mitteilt,
der andere Transaktionspartner (Bank, 2) die Antwort dem Mobilfunknetz (3) mitteilt,
seitens des Mobilfunknetzes (3) die von dem anderen Transaktionspartner (Bank, 2) mitgeteilte Antwort mit der seitens des Mobilfunknetzes (3) vorliegenden Antwort auf die Frage verglichen wird und
das Ergebnis des Vergleichs (9) dem anderen Transaktionspartner (Bank, 2) mitgeteilt wird;
**dadurch gekennzeichnet dass** eine Liste von Fragen nebst entsprechenden Antworten von dem einen Transaktionspartner (Kunde,1) zusammengestellt und/oder vorgegeben ist und wobei die Frage aus der dem Mobilfunknetz zugänglichen Liste von Fragen zufällig ausgewählt wird, wobei der eine Transaktionspartner (Kunde, 1) anhand der ihm (Kunde, 1) übersandten Nachricht mit von ihm (Kunde, 1) hinterlegten Inhalt erkennen bzw. darauf schließen kann, dass der andere Transaktionspartner (Bank, 2) echt sein muss.

5. Verfahren nach einem der Ansprüche 1 bis 4, **dadurch gekennzeichnet, dass** dem einen Transaktionspartner (Kunde, 1) von dem Mobilfunknetz (3) Fragen zur Zusammenstellung der Liste von Fragen vorgeschlagen werden, vorzugsweise in auswählbarer Form.

6. Verfahren nach Anspruch 4 oder Anspruch 5, **dadurch gekennzeichnet, dass** der eine Transaktionspartner (Kunde, 1) dem anderen Transaktionspartner (Bank, 2) die Antwort auf die Frage im Rahmen des Transaktionsdialogs (7) mitteilt.

7. Verfahren nach einem der Ansprüche 1 bis 6, **dadurch gekennzeichnet, dass** der andere Transaktionspartner (Bank, 2) dem Mobilfunknetz (3) die Antwort durch Senden einer Nachricht eines Nachrichtendienstes des Mobilfunknetzes (3) mitteilt.

8. Verfahren nach einem der Ansprüche 1 bis 7, **dadurch gekennzeichnet, dass** das Mobilfunknetz (3) dem anderen Transaktionspartner (Bank, 2) das Ergebnis des Vergleichs durch Senden einer Nachricht eines Nachrichtendienstes des Mobilfunknetzes (3) mitteilt.

9. Verfahren nach einem der Ansprüche 1 bis 8, **dadurch gekennzeichnet, dass** das Ergebnis des Vergleichs (9) dem anderen Transaktionspartner (Bank, 2) bei Übereinstimmung der mitgeteilten Antwort mit der seitens des Mobilfunknetzes (3) vorliegenden Antwort auf die Frage mitgeteilt wird.

10. Verfahren nach einem der Ansprüche 1 bis 9, **gekennzeichnet durch** einen Kurmitteilungsdienst (SMS: Short Message Service), einen Multimedia-Mitteilungsdienst (MMS: Multimedia Message Service) und/oder einen Nachrichtensofortversanddienst (Instant Messaging Service) als Nachrichtendienst des Mobilfunknetzes (3).

11. Verfahren nach einem der Ansprüche 4 bis 10, **dadurch gekennzeichnet, dass** der Transaktionsdialog (4, 7) über ein nichtverbindungsorientiertes Kommunikationsnetzwerk, vorzugsweise das Internet, erfolgt.

12. Verfahren nach einem der Ansprüche 1 bis 11, **dadurch gekennzeichnet, dass** dieses zumindest teilweise seitens eines Mobilfunknetzes (3), vorzugsweise gemäß dem GSM-, GPRS- und/oder UMTS-Funknetzstandard, ausgeführt wird.

13. Verfahren nach einem der Ansprüche 1 bis 12, **dadurch gekennzeichnet, dass** dieses zumindest teilweise seitens eines in einem Mobilfunknetz (3), vorzugsweise gemäß dem GSM-, GPRS- und/oder UMTS-Funknetzstandard, betreibbaren Endgeräts, vorzugsweise mobilen Endgeräts, ausgeführt wird.

14. Mobilfunknetz (3), vorzugsweise gemäß dem GSM-, GPRS- und/oder UMTS-Funknetzstandard, **dadurch gekennzeichnet, dass** dieses ausgebildet und/oder eingerichtet ist ein Verfahren nach einem der Ansprüche 1 bis 13 auszuführen.

15. Endgerät zum Betrieb in einem Mobilfunknetz (3), vorzugsweise gemäß dem GSM-, GPRS- und/oder UMTS-Funknetzstandard, **dadurch gekennzeichnet, dass** dieses ausgebildet und/oder eingerichtet ist ein Verfahren nach einem der Ansprüche 1 bis 13 auszuführen.

## Claims

1. A method for the mutual authentification of two transaction partners taking part in a transaction (customer, 1, bank, 2), namely the one transaction partner (customer, 1) and the other transaction partner (bank, 2), wherein the one transaction partner (customer, 1)
- sends the other transaction partner (bank, 2) at least the mobile network call number (MSISDN) that has been unequivocally allocated to him (customer, 1) by a mobile radio network (3),
- receives a message containing a question from a terminal which uses the mobile network call number (MSISDN) and which can be operated in a mobile radio network (3) via a message service of the mobile radio network (3) and
- sends the other transaction partner (bank, 2) the response to the question;
**characterized in that** a list of questions together with corresponding answers has been compiled and/or specified by the one transaction partner (customer, 1) and wherein the question will be randomly selected from the list of questions accessible to the mobile radio network, wherein the one transaction partner (customer, 1) can recognize or conclude that the other transaction partner (bank, 2) must be authentic on the base of the message sent to him (customer, 1) containing a content stored by him (customer, 1).

2. A method for the mutual authentification of two transaction partners taking part in a transaction (customer, 1, bank, 2), namely the one transaction partner (customer, 1) and the other transaction partner (bank, 2), wherein the other transaction partner (bank, 2)
- at least receives the mobile network call number (MSISDN) that has been unequivocally allocated to the one transaction partner (customer, 1) by a mobile radio network (3),
- initiates the sending of a message containing a question by means of a message service of the mobile radio network (3) to the mobile network call number (MSISDN),
- receives a response to the sent question,
- sends the response by means of a message service of the mobile radio network (3) to the mobile radio network (3) and
- receives the result of a comparison (9) of the sent response with a response to the question bring available in the mobile radio network (3) by means of a message service of the mobile radio network (3);
**characterized in that** a list of questions together with corresponding answers has been compiled and/or specified by the one transaction partner (customer, 1) and wherein the question will be randomly selected from the list of questions accessible to the mobile radio network, wherein the one transaction partner (customer, 1) can recognize or conclude that the other transaction partner (bank, 2) must be authentic on the base of the message sent to him (customer, 1) containing a content stored by him (customer, 1).

3. A method for the mutual authentification of two transaction partners taking part in a transaction (customer, 1, bank, 2), namely the one transaction partner (customer, 1) and the other transaction partner (bank, 2), wherein
the mobile radio network
- receives a request (5), while being informed about a mobile network call number (MSISDN), to send a message containing a question by means of a message service of the mobile radio network (3) to the mobile network call number (MSISDN),
- sends a message containing a question by means of a message service of the mobile radio network (3) to the mobile network call number (MSISDN),
- receives a response to the sent question from the sender (bank, 2) of the request (5) to send the question by means of a message service of the mobile radio network (3),
- compares the received response with a response to the question available in the mobile radio network (3) and
- sends the result of the comparison (9) to the sender (bank, 2) of the request (5) by means of a message service of the mobile radio network (3);
**characterized in that** a list of questions together with corresponding answers has been compiled and/or specified by the one transaction partner (customer, 1) and wherein the question will be randomly selected from the list of questions accessible to the mobile radio network, wherein the one transaction partner (customer, 1) can recognize or conclude that the other transaction partner (bank, 2) must be authentic on the base of the message sent to him (customer, 1) containing a content stored by him (customer, 1).

4. A method for the mutual authentification of two transaction partners taking part in a transaction (customer, 1, bank, 2), namely the one transaction partner (customer, 1) and the other transaction partner (bank, 2), wherein within the scope of a transaction dialogue (4) between the transaction partners (customer, 1, bank, 2) the one transaction partner (customer, 1) discloses at least the mobile network call number (MSISDN) which has been unequivocally allocated to him by a mobile radio network (3) to the other transaction partner (bank, 2),
the other transaction partner (bank, 2) requests the mobile radio network (3), while disclosing the mobile network call number (MSISDN), to send a message containing a question of a message service of the mobile radio network (3) to the mobile network call number (MSISDN),
the mobile radio network (3) sends a message (6) containing a question of a message service of the mobile radio network (3) to the mobile network call number (MSISDN) of the one transaction partner (customer 1),
the one transaction partner (customer, 1) informs the other transaction partner (bank, 2) about the response to the question,
the other transaction partner (bank, 2) informs the mobile radio network (3) about the response,
the mobile radio network (3) compares the response communicated by the other transaction partner (bank, 2) with the response to the question available in the mobile radio network (3) and
the other transaction partner (bank, 2) is informed about the result of the comparison (9);
**characterized in that** a list of questions together with corresponding answers has been compiled and/or specified by the one transaction partner (customer, 1) and wherein the question will be randomly selected from the list of questions accessible to the mobile radio network, wherein the one transaction partner (customer, 1) can recognize or conclude that the other transaction partner (bank, 2) must be authentic on the base of the message sent to him (customer, 1) containing a content stored by him (customer, 1).

5. A method according to one of the claims 1 to 4, **characterized in that** the mobile radio network (3) proposes the one transaction partner (customer, 1) questions for making the list of questions, preferably in a selectable manner.

6. A method according to claim 4 or claim 5, **characterized in that** the one transaction partner (customer 1) informs the other transaction partner (bank, 2) about the response to the question within the scope of the transaction dialogue (7).

7. A method according to one of the claims 1 to 6, **characterized in that** the other transaction partner (bank, 2) informs the mobile radio network (3) about the response by sending a message of a message service of the mobile radio network (3).

8. A method according to one of the claims 1 to 7, **characterized in that** the mobile radio network (3) informs the other transaction partner (bank, 2) about the result of the comparison by sending a message of a message service of the mobile radio network (3).

9. A method according to one of the claims 1 to 8, **characterized in that** the other transaction partner (bank, 2) will be informed about the result of the comparison (9), if the communicated response coincides with the response to the question available in the mobile radio network (3).

10. A method according to one of the claims 1 to 9, **characterized by** the short message service (SMS: Short Message Service), a multimedia message service (MMS:Multimedia Message Service) and/or an instant messaging service as message service of the mobile radio network (3).

11. A method according to one of the claims 4 to 10, **characterized in that** the transaction dialogue (4, 7) takes place via a non-connection-oriented communication network, preferably the internet.

12. A method according to one of the claims 1 to 11, **characterized in that** this one is at least partially carried out by a mobile radio network (3), preferably according to the GSM, GPRS and/or UMTS radio network standard.

13. A method according to one of the claims 1 to 12, **characterized in that** this one is at least partially carried out by a terminal, preferably a mobile terminal that can be operated in a mobile radio network (3), preferably according to the GSM, GPRS and/or UMTS radio network standard.

14. A mobile radio network (3), preferably according to the GSM, GPRS and/or UMTS radio network standard, **characterized in that** this one is designed and/or adapted to carry out a method according to one of the claims 1 to 13.

15. A terminal for being operated in a mobile radio network (3), preferably according to the GSM, GPRS and/or UMTS radio network standard, **characterized in that** this one is designed and/or adapted to carry out a method according to one of the claims 1 to 13.

## Revendications

1. Procédé d'authentification mutuelle de deux partenaires de transaction (client, 1, banque 2) participant à une transaction, à savoir l'un partenaire de transaction (client, 1) et l'autre partenaire de transaction (banque, 2),
dans lequel
l'un partenaire de transaction (client, 1)
- envoie au moins le numéro d'appel de réseau radio mobile (MSISDN), qu'un réseau radio mobile (3) lui (client, 1) a attribué sans équivoque à l'autre partenaire de transaction (banque, 2),
- reçoit un message contenant une question par un terminal utilisant le numéro d'appel de réseau radio mobile (MSISDN) et fonctionnant dans un réseau radio mobile (3) via un service de messages du réseau radio mobile (3),
- envoie la réponse à la question à l'autre partenaire de transaction (banque, 2);
**caractérisé en ce qu'**une liste de questions ensemble avec des réponses correspondantes a été dressée et/ou prédéfinie par l'un partenaire de transaction (client, 1), et dans lequel la question est sélectionnée de manière aléatoire dans la liste de questions accessible au réseau radio mobile, dans lequel l'un partenaire de transaction (client, 1) peut reconnaître ou conclure sur la base du message, qui lui (client, 1) a été envoyé et qui contient un contenu stocké par lui (client, 1), que l'autre partenaire de transaction (banque, 2) doit être authentique.

2. Procédé d'authentification mutuelle de deux partenaires de transaction (client, 1, banque 2) participant à une transaction, à savoir l'un partenaire de transaction (client, 1) et l'autre partenaire de transaction (banque, 2),
dans lequel l'autre partenaire de transaction (banque, 2)
- reçoit au moins le numéro d'appel de réseau radio mobile (MSISDN), qui a été attribué sans équivoque à l'un partenaire de transaction (client, 1) par un réseau radio mobile (3),
- initie l'envoi d'un message contenant une question par moyen d'un service de messages du réseau radio mobile (3) au numéro d'appel de réseau radio mobile (MSISDN),
- reçoit une réponse à la question envoyée,
- envoie la réponse par moyen d'un service de messages du réseau radio mobile (3) au réseau radio mobile (3) et
- reçoit le résultat d'une comparaison (9) de la réponse envoyée avec une réponse à la question, qui est disponible dans le réseau radio mobile (3), par moyen d'un service de messages du réseau radio mobile (3) ;
**caractérisé en ce qu'**une liste de questions ensemble avec des réponses correspondantes a été dressée et/ou prédéfinie par l'un partenaire de transaction (client, 1), et dans lequel la question est sélectionnée de manière aléatoire dans la liste de questions accessible au réseau radio mobile, dans lequel l'un partenaire de transaction (client, 1) peut reconnaître ou conclure sur la base du message, qui lui (client, 1) a été envoyé et qui contient un contenu stocké par lui (client, 1), que l'autre partenaire de transaction (banque, 2) doit être authentique.

3. Procédé d'authentification mutuelle de deux partenaires de transaction (client, 1, banque 2) participant à une transaction, à savoir l'un partenaire de transaction (client, 1) et l'autre partenaire de transaction (banque, 2),
dans lequel
le réseau radio mobile
- reçoit une demande (5), avec l'information d'un numéro d'appel de réseau radio mobile (MSISDN), d'envoyer un message contenant une question par moyen d'un service de messages du réseau radio mobile (3) au numéro d'appel de réseau radio mobile (MSISDN),
- envoie un message contenant une question par moyen d'un service de messages du réseau radio mobile (3) au numéro d'appel de réseau radio mobile (MSISDN),
- reçoit une réponse à la question envoyée de l'émetteur (banque, 2) de la demande (5) d'envoyer la question par moyen d'un service de messages du réseau radio mobile (3),
- compare la réponse reçue avec une réponse à la question disponible dans le réseau radio mobile (3) et
- envoie le résultat de la comparaison (9) à l'émetteur (banque, 2) de la demande (5) par moyen d'un service de messages du réseau radio mobile (3) ;
**caractérisé en ce qu'**une liste de questions ensemble avec des réponses correspondantes a été dressée et/ou prédéfinie par l'un partenaire de transaction (client, 1), et dans lequel la question est sélectionnée de manière aléatoire dans la liste de questions accessible au réseau radio mobile, dans lequel l'un partenaire de transaction (client, 1) peut reconnaître ou conclure sur la base du message, qui lui (client, 1) a été envoyé et qui contient un contenu stocké par lui (client, 1), que l'autre partenaire de transaction (banque, 2) doit être authentique.

4. Procédé d'authentification mutuelle de deux partenaires de transaction (client, 1, banque 2) participant à une transaction, à savoir l'un partenaire de transaction (client, 1) et l'autre partenaire de transaction (banque, 2),
dans lequel
dans le cadre d'un dialogue de transaction (4) entre les partenaires de transaction (client, 1, banque, 2) l'un partenaire de transaction (client, 1) communique au moins le numéro d'appel de réseau radio mobile (MSISDN), qui lui a été attribué sans équivoque par un réseau radio mobile (3), à l'autre partenaire de transaction (banque, 2),
l'autre partenaire de transaction (banque, 2) demande au réseau radio mobile (3) en communiquant le numéro d'appel de réseau radio mobile (MSISDN) d'envoyer un message (6) contenant une question d'un service de messages du réseau radio mobile (3) au numéro d'appel de réseau radio mobile (MSISDN),
le réseau radio mobile (3) envoie un message (6) contenant une question d'un service de messages du réseau radio mobile (3) au numéro d'appel de réseau radio mobile (MSISDN) de l'un partenaire de transaction (client, 1), l'un partenaire de transaction (client, 1) informe l'autre partenaire de transaction (banque, 2) sur la réponse à la question,
l'autre partenaire de transaction (banque, 2) communique la réponse au réseau radio mobile (3),
le réseau radio mobile (3) compare la réponse communiquée par l'autre partenaire de transaction (banque, 2) avec la réponse à la question disponible dans le réseau radio mobile (3), et
le résultat de la comparaison (9) est communiqué à l'autre partenaire de transaction (banque, 2) ;
**caractérisé en ce qu'**une liste de questions ensemble avec des réponses correspondantes a été dressée et/ou prédéfinie par l'un partenaire de transaction (client, 1), et dans lequel la question est sélectionnée de manière aléatoire dans la liste de questions accessible au réseau radio mobile, dans lequel l'un partenaire de transaction (client, 1) peut reconnaître ou conclure sur la base du message, qui lui (client, 1) a été envoyé et qui contient un contenu stocké par lui (client, 1), que l'autre partenaire de transaction (banque, 2) doit être authentique.

5. Procédé selon l'une des revendications 1 à 4, **caractérisé en ce que** le réseau radio mobile (3) propose des questions pour dresser la liste de questions à l'un partenaire de transaction (client, 1), de préférence de manière sélectionnable.

6. Procédé selon la revendication 4 ou la revendication 5, **caractérisé en ce que** l'un partenaire de transaction (client, 1) communique la réponse à la question à l'autre partenaire de transaction (banque, 2) dans le cadre du dialogue de transaction (7).

7. Procédé selon l'une des revendications 1 à 6, **caractérisé en ce que** l'autre partenaire de transaction (banque, 2) communique la réponse au réseau radio mobile (3) par l'envoi d'un message d'un service de messages du réseau radio mobile (3).

8. Procédé selon l'une des revendications 1 à 7, **caractérisé en ce que** le réseau radio mobile (3) communique le résultat de la comparaison à l'autre partenaire de transaction (banque, 2) par l'envoi d'un message d'un service de messages du réseau radio mobile (3).

9. Procédé selon l'une des revendications 1 à 8, **caractérisé en ce que** le résultat de la comparaison (9) sera communiqué à l'autre partenaire de transaction (banque, 2), si la réponse communiquée coïncide avec la réponse à la question disponible dans le réseau radio mobile (3).

10. Procédé selon l'une des revendications 1 à 9, **caractérisé par** un service de messages courts (SMS: Short Message Service), un service de messages multimédia (MMS: Multimedia Message Service) et/ou un service de messagerie instantanée (Instant Messaging Service) en tant que service de messages du réseau radio mobile (3).

11. Procédé selon l'une des revendications 4 à 10, **caractérisé en ce que** le dialogue de transaction (4, 7) se déroule via un réseau de communication en mode non-connecté, de préférence via l'internet.

12. Procédé selon l'une des revendications 1 à 11, **caractérisé en ce que** celui-ci est au moins partiellement effectué par un réseau radio mobile (3), de préférence selon le standard de réseau radio GSM, GPRS et/ou UMTS.

13. Procédé selon l'une des revendications 1 à 12, **caractérisé en ce que** celui-ci est au moins partiellement effectué par un terminal, de préférence par un terminal mobile, qui fonctionne dans un réseau radio mobile (3), de préférence selon le standard de réseau radio GSM, GPRS et/ou UMTS.

14. Réseau radio mobile (3), de préférence selon le standard de réseau radio GSM, GPRS et/ou UMTS, **caractérisé en ce que** celui-ci est configuré pour et/ou adapté à effectuer un procédé selon l'une des revendications 1 à 13.

15. Terminal fonctionnant dans un réseau radio mobile (3), de préférence selon le standard de réseau radio GSM, GPRS et/ou UMTS, **caractérisé en ce que** celui-ci est configuré pour et/ou adapté à effectuer un procédé selon l'une des revendications 1 à 13.
